Europäisches Patentamt

European Patent Office    (11) Publication number:    **0 320 210**

Office européen des brevets    **A2**

(12)    **EUROPEAN PATENT APPLICATION**

(21) Application number: 88311545.3    (51) Int. Cl.⁴: **F16L 59/10 , F16L 59/14**

(22) Date of filing: 06.12.88

(30) Priority: 09.12.87 GB 8728749

(43) Date of publication of application:
14.06.89 Bulletin 89/24

(84) Designated Contracting States:
AT BE CH DE ES FR GB GR IT LI LU NL SE

(71) Applicant: **W.R. GRACE LIMITED**
**Northdale House North Circular Road**
**London NW10 7UH(GB)**

(72) Inventor: **Martin, Timothy John**
**Loxwood Chase**
**Loxwood, West Sussex(GB)**
Inventor: **Robinson, Timothy William**
**23 Ash Grove**
**Bognor Regis Sussex P022 9JT(GB)**
Inventor: **Pickett, Matthew Thomas**
**8 Crescenta Walk**
**Bognor Regis Sussex(GB)**

(74) Representative: **Senior, Alan Murray et al**
**J.A. KEMP & CO 14 South Square Gray's Inn**
**London WC1R 5EU(GB)**

(54) **Pipe wrapping material.**

(57) A wrapping for a pipe to be located within a surrounding insulating body, the wrapping comprising a carrier film with a slip layer carried thereon, the slip layer including a temperature stable fabric and, impregnated into and carried by the fabric, a mixture of a structuring agent such as a wax, preferably also a grease, and a tackifier agent having adhesive properties so as initially to adhere wrapping to the pipe and having in addition the property of reducing its viscosity with thermal ageing.

## Fig.1.

## PIPE WRAPPING MATERIAL

This invention relates to a pipe wrapping material for use in insulated pipe systems.

It is known to provide insulated pipe systems comprising steel pipe encapsulated in an insulating material which is itself within an outer casing. Pipe work of this type may for instance be used in so-called district heating systems where hot water or steam is supplied to several houses from a central location. Normally the pipe itself is of steel and the outer casing of high density polyethylene. The insulating material between the two may include polystyrene, polyurethane, other foams, or mineral wool. The pipe is preformed at the factory, and lengths are joined on site by welding the sections of steel pipe together and making up the insulating material and surrounding outer casing. Other applications of such pipe work, for instance for conveying other fluids, can also be envisaged.

In use of the pipe work there may be multiple temperature changes at the inside depending upon the demand for the hot water or steam or whatever fluid is involved, and there are temperature changes also at the outside depending on ambient conditions. Accordingly there are many differential contraction and expansion conditions which have to be accommodated. Expansion and contraction of the steel pipe as such is sometimes taken up by intermittent provision of bellows structures on straight lengths or by allowing room for movement at curves and corners. The differential movement between the outer and inner parts of the pipe work is usually accommodated by making the steel pipe slidable relative to the rest of the structure. Such sliding can be facilitated by providing a bituminous coating or wrapping on the steel pipe, which also serves as corrosion protection. When hot, the bitumen softens and lubricates the pipe which can then move within the insulation. However, because of the high temperature to which the pipe is frequently raised, the bituminous materials used hitherto have suffered early degradation, leading to stiffness and brittleness and failure to perform the lubricating function. In addition the associated corrosion prevention function is also jeopardised. Once this occurs the insulation becomes damaged upon relative movement of the steel pipe, leading to increased heat loss and potential for corrosion.

Further, district heating water is frequently circulated super-heated so that temperatures reaching at least 130°C may have to be withstood.

Great difficulty has been encountered in developing an improved pipe wrap which provides appropriate slip properties when hot with resistance to long term high temperature thermal ageing. However, the present invention goes a long way to overcome the problems.

According to the present invention there is provided a wrapping for a pipe to be located within a surrounding insulating body, the wrapping comprising a carrier film with a slip and anticorrosion layer carried thereon, the slip layer including a temperature stable fabric and, impregnated into and carried by the fabric, a structured self adhesive slidable composition able initially to adhere the wrapping to the pipe and being thermally stable so as subsequently to display an enduring slidable property.

Thermal stability can be provided by the use of silicone grease as or in the composition. Alternatively, the thermal stability is maintained by a wrapping as described above wherein the thermally stable slidability is maintained by the composition including at least two components, the net viscosity properties of which remain substantially unchanged. In such a case, the properties of the ingredients in the composition are desirably matched to maintain slidability.

The invention more particularly provides a wrapping for a pipe to be located within a surrounding insulating body, the wrapping comprising a carrier film with a slip and anticorrosion layer carried thereon, the slip layer including a temperature stable fabric and, impregnated into and carried by the fabric, a mixture of a structuring agent such as a wax, and a tackifier agent having adhesive properties so as initially to adhere wrapping to the pipe and having in addition the property of reducing its viscosity with thermal ageing.

Preferably the wrapping also includes a thermally stable oil to lubricate and act as a plasticiser in the mixture. At least one of the oil, structuring agent and tackifier agent may be a silicone fluid. Where such oil is provided, the tackifier can be liquid or substantially solid. In cases without oil, the tackifier will generally be liquid. Normally the oil will be in the form of a prepared grease. The tackifier is preferably hydrophobic.

The wrapping will normally be provided so as to be applied to the steel pipe with a so-called cigarette wrap that is to say with a longitudinal overlap parallel to the axis of the pipe and with adjacent sections overlapping each other with a circumferential overlap as well.

Any suitable thermally stable polymer film will normally be appropriate for the carrier film. The film may be silicone or silicone coated. A polymer coated paper is within the definition of the carrier film, but may be limited as to the temperature it can withstand. The functions of the carrier film are to act as an initial support for the wrapping and also to separate the mixture from the insulating material which the mixture might easily damage. Particularly suitable carrier films are based on polyester. One suitable film is Melinex 850, obtainable from ICI, which is a polyester film based on polyethylene terephthalate. A suitable thickness for the carrier film is 10 to 75 microns; preferably 15 to 30 microns.

The fabric needs to be thermally stable but otherwise can take a variety of forms, e.g. felted, stitched, woven or perhaps spun bonded. It can be based on glass fibres or polyester fibres, for instance it can be a polyester fabric. Among suitable fabrics are PP 30/100/9HS stitched polyester fabric of 100 gsm obtainable from Cosmopolitan Textiles of Winsford, Cheshire; needle punched polyester stable fibre batts obtained for instance from Dakomet Wattex of Buggenhout Belgium, and woven glass fibre mats such as are readily available, for instance from Fothergill Engineered Fabrics Ltd of Littleborough, Lancashire.

So far as the structuring agent is concerned, this typically is wax such as a paraffin wax of melting point $50°C-100°C$, preferably $63°C$ to $68°C$ (145 to 155$°F$) to give a general structure to the mixture in the fabric. Other compatible materials of similar melting point might be used. To this can, if desired, be added a micro crystalline wax of higher melting point, typically $70-74°C$ (160-165$°F$) in order to increase hardness and structural integrity of the slip layer. The waxes act to give structure to the mixture at ambient application temperatures.

The tackifier, which preferably is hydrophobic, is used as an addition to control the viscosity, decreasing the effect of high temperatures on the viscosity of the system. It also acts to increase initial tack or "grab" making application of the wrapping to the internal pipe prior to provision of the insulation easier. Desirably the tackifier, as it degrades, obtains a lower viscosity, in contrast to the thermally stable hydrocarbon oil where provided and the wax the viscosity of which will increase with time. The aim in preferred embodiments is that on balance the viscosity will remain substantially constant with age. Polybutene, obtainable for instance as Hyvis 2000 from B.P. Chemicals is suitable. This is a highly tacky polymer compatible with mineral oils with good thermal stability and reduced viscosity under such ageing as does occur. An antioxidant for the polymer is desirably included as well, such as Irganox 1010.

Most embodiments also use a thermally stabilised hydrocarbon or silicone oil. Because there is a need to retain sufficient structure in the mixture at the elevated service temperatures to prevent excessive fluidity of the mixture, the oil may include structuring agents so that it effectively forms a grease. This may be achieved by the use of thermally stable clay and lithium soap gellants. Silicon dioxide thixotropes may be added to the mixture and excessive fluidity at elevated temperatures is also controlled by the use of the high molecular weight tackifier whose viscosity is less affected by increasing temperature. The hydrocarbon oil may be, alternatively, suitably obtained in the form of a pre-compounded modified thermally stable grease in the mixture. The choice of grease is important, as it needs particularly to be of high thermal stability. The grease can provide the low friction characteristics, and its viscosity will decrease with increasing temperature. However grease has low cohesive strength at ambient temperature, leading to the requirement for wax as discussed above. Among the possibilities for thermally stable grease are Darina R2 (obtainable from Shell Lubricants (UK)) which is a solvent refined high viscosity mineral oil with inorganic clay thickeners and high temperature oxidation inhibitor. Another possibility is Liplex EP Grease 2, a lithium grease also obtained from Shell Lubricants (UK).

A thixotropic agent can if desired be added to further increase the structural stability. A silicon dioxide, typically Aerosil 380 from Degussa of Frankfurt West Germany with surface area $380m^2/g$ is one suitable agent.

Carbon black to act as a free radical stabiliser can also with advantage be included in the mixture.

Using the above described materials a low friction, thermally stable, self supporting adhesive tape system can be obtained, by impregnating the fabric with the mixture, and supporting the impregnated fabric on the carrier. Heat stable anti-corrosion protection and low friction properties can both be obtained.

The fabric traps and provides a reservoir for the mixture or low-friction material, and also assists the mixture structuring agents in preventing flow-out from the ends of wrapped sections when pressure is applied.

A protective coating for instance of siliconised paper or low cost film polypropylene is usually provided on the adhesive side of the mixture or slip layer. This prevents mixture from transferring to the continuous carrier film top surface where it would contaminate the insulating foam material during use. It is removed prior to application to a pipe. Alternatively the carrier film may be provided with a easy-release coating, for example silicone, on its upper surface enabling the material to be wrapped up upon itself and subsequently unrolled without damage and with complete release.

Thus the mixture comprises a tackifying agent to stick the slip layer to the pipe and control the viscosity, the wax or other structuring agent to create the room and service temperature structures, and, in preferred embodiments, the grease to lubricate and to confer high temperature structure are all retained within the fabric and attached to the carrier film. The resultant structure therefore provides low friction lubrication, both initially and after considerable ageing. All ingredients have excellent water resistance and because of the adhesion and conformability to any irregularities in the pipes surfaces enable the exclusion of water from that surface and therefore the structure gives water proofing pipe protection and thus provides a corrosion resistant coating for the pipe while preventing the material of the slip layer leaking into the surrounding insulating foam material.

The accompanying drawings illustrate the invention and its main intended use.

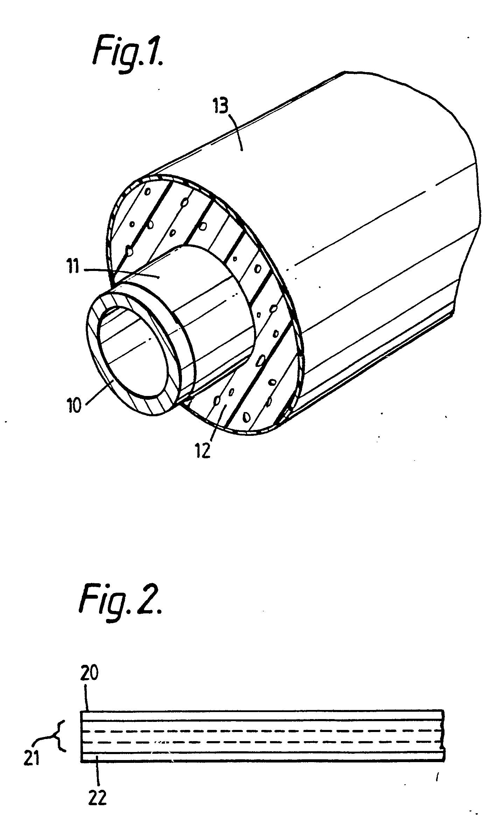

Shown in Figure 1 is a perspective sectional view through a typical district heating pipe. This has an inner steel tube 10 to carry the hot super heated water or other fluid. Surrounding the tube 10 is a wrapping 11 in accordance with the invention with its carrier film outermost. At the outside of the construction is a cover tube 13 typically of high density polyethylene, or other materials such as coated steel or glass reinforced plastic. Between the outer tube 13 and the covered inner tube 10 is insulating material 12 such as of expanded polyurethane. In use, as the temperature differential between the inner tube 12 and outer tube 13 changes leading to relative movement between the two, this movement takes place in a low friction substantially unrestricted manner by reason of the mixture or slip layer in the wrapping 11 according to the invention. As discussed this slip layer is designed to maintain the low friction properties without serious thermal ageing for long periods of time. Were it to fail to do that and become brittle, not only would water penetration to the steel pipe be more likely but the low friction properties would be lost. It is easy to see that this would lead to tearing and destruction of the insulating material 12.

Figure 2 is a schematic view of a wrapping according to the invention having at the top a carrier film 20 attached to a slip layer impregnated fabric 21. At the side of the slip layer remote from the carrier is a release sheet 22. Upon application the release sheet is removed and the wrapping is applied to a pipe 10 in the so-called cigarette wrapping style as illustrated in Figure 1 although other wrapping arrangements can if desired be used. Successive wrappings along the length of the tube 10 have a circumferential overlap as well as their longitudinal overlaps.

The following Examples illustrate the invention. In each case a wrapping of the invention comprises a Melinex 850 (ICI) carrier film and as the carrier fabric a stitched polyester fabric 100gsm (Cosmopolitan Textiles). The variations between Examples concern only the mixture.

Example 1

The mixture comprised:

| (Grease) Liplex EP2 | 40 parts by weight |
|---|---|
| Hyvis 2000 (polybutene) | 40 |
| Paraffin wax 145/155 | 20 |

This wrapping offered good low friction properties and thermal ageing. Due to the high grease content, which is largely responsible for low friction properties, difficulty might be encountered in removing the release sheet entirely cleanly.

Example 2

| Hyvis 2000 (polybutene) | 90.0 |
|---|---|
| Paraffin wax 145/155 | 10.0 |

The absence of grease means that low friction properties are less good, but thermal ageing resistance is very good and there is no problem removing the release sheet.

Example 3

4

| Grease, Liplex EP2 | 5.0 |
|---|---|
| Hyvis 2000 (polybutene) | 85.0 |
| Paraffin wax 145/155 | 10.0 |

This example offered better low friction properties than Example 2 and better thermal ageing than Example 1 due to the high polybutene content.

Example 4

| Grease Darina R2 | 40.0 |
|---|---|
| Hyvis 2000 (polybutene) | 40.0 |
| Paraffin wax 145/155 | 20.0 |

This mixture has similar properties to Example 1 but is less thermally resistant than some others.

Example 5

| Grease Darina R2 | 40.0 |
|---|---|
| Hyvis 2000 (polybutene) | 40.0 |
| Micro wax 160/165 | 20.0 |

This Example has a wax of higher melting point (160-165° F) than Example 4 giving improved ambient temperature handling properties but with little difference in performance.

Example 6

| Grease Liplex EP2 | 40.0 |
|---|---|
| Hyvis 2000 (polybutene) | 40.0 |
| Micro wax 160/165 | 20.0 |

This differs from Example 1 only as to the wax which leads to improved ambient temperature handling properties.

Example 7

| Grease Darina R2 | 40.0 |
|---|---|
| Hyvis 2000 (Polybutene) | 40.0 |
| Paraffin wax 145/155 | 20.0 |
| Aerosil 380 (SiO$_2$) | 4.0 |

This example is like Example 4 but with the SiO$_2$ thixotrope which acts as an additional structuring agent to improve the cleanliness of the release from the release paper.

Example 8

| | |
|---|---|
| Grease Darina R2 | 80.0 |
| Paraffin wax | 20.0 |

This example has very good low frictional properties and, having no polybutene for thermal stability, is more suitable for lower service temperature situations.

It will be understood that different mixtures are appropriate to different end use situations. Indeed, particularly for relatively low service temperature work, it may even be possible, within the invention, to dispense with the tackifier agent altogether, in which case, according to the invention, the invention requires the mixture only to have the structuring agents and thermally stable hydrocarbon oil, preferably in the form of grease.

Example 9

| | |
|---|---|
| Molykote 44M (Silicone Grease) | 100 |

This example, using commercially available silicone grease, has good thermal ageing performance but is somewhat difficult to remove cleanly from the release sheet and is expensive.

Example 10

Dow Corning 200/100

(Mid Viscosity Silicone oil)        5.0

Dow Corning 200/600,000

(High Viscosity Silicone oil)   48.0

Aerosil 350 (Silica)                 5.0

Calofort S (Calcium Carbonate) 40.0

Paraffin Wax 145/155                 2.0

In this example wax and silica are used to structure a silicone plasticiser and a silicone tackifier. The wrap has good thermal ageing performance and is less expensive due to the incorporation of a filler.

Example 11

6

| Hyvis 2000 (polybutene) | 66.0 |
|---|---|
| Dow Corning 200/1000 (Silicone oil) | 30.0 |
| Aerosil 350 (Silica) | 3.0 |
| Irganox 1010 (antioxidant) | 1.0 |

In this example silicone oil is used to plasticise a polybutene tackifier. To improve to overall thermal stability of the system an antioxidant is incorporated. This additional component is optional in all examples.

Example 12

| Grease Liples EP2 | 60.0 |
|---|---|
| Dow Corning 200/600,000 (Silicone oil) | 22.5 |
| Paraffin Wax 145/155 | 15.0 |
| Aerosil 350 (Silica) | 2.0 |
| Irganox 1010 (antioxidant) | 0.5 |

In this example a high viscosity silicone oil is used as the tackifier component only, confering high thermal stability at intermediate cost.

## Claims

1. A wrapping for a pipe to be located within a surrounding insulating body, the wrapping comprising a carrier film with a slip and anticorrosion layer carried thereon, the slip layer including a temperature stable fabric and, impregnated into and carried by the fabric, a structured self adhesive slidable composition able initially to adhere the wrapping to the pipe and being thermally stable so as subsequently to display an enduring slidable property.

2. A wrapping according to claim 1 wherein the thermally stable slidability is provided by silicone grease as or in the composition.

3. A wrapping according to claim 1 wherein the thermally stable slidability is maintained by the composition including at least two components, the net viscosity properties of which remain substantially unchanged.

4. A wrapping for a pipe to be located within a surrounding insulating body, the wrapping comprising a carrier film with a slip and anticorrosion layer carried thereon, the slip layer including a temperature stable fabric and, impregnated into and carried by the fabric, a mixture of a structuring agent such as a wax, and a tackifier agent having adhesive properties so as initially to adhere wrapping to the pipe and having in addition the property of reducing its viscosity with thermal ageing.

5. A wrapping according to claim 4 including a thermally stable oil to lubricate and act as a plasticiser in the mixture.

6. A wrapping according to claim 4 or 5 wherein at least one of the thermally stable oil, structuring agent and tackifier agent is a silicone fluid.

7. A wrapping according to claim 5 or 6 wherein the oil is a hydrocarbon oil which is a solvent refined high viscosity mineral oil with oxidation inhibitor, and clay or lithium complex thickener.

8. A wrapping according to claim 5 or 6 wherein the oil is a hydrocarbon oil which is in the form of pre-compounded thermally stable grease.

9. A wrapping according to any one of claims 4 to 8 wherein the structuring agent is paraffin wax of melting point 50° to 100° C.

10. A wrapping according to any one of claims 4 to 9 wherein the tackifier is a high molecular weight polybutene.

11. A wrapping according to any one of claims 4 to 10 further including in the mixture a thixotropic agent such as silicon dioxide.

12. A wrapping according to any one of claims 4 to 11 including carbon black in the mixture.

13. A wrapping according to any preceding claim wherein the carrier film is a polyester film.

14. A wrapping according to any preceding claim wherein the carrier film has a thickness of 10 to 75 microns, preferably 15 to 30 microns.

15. A wrapping according to any preceding claim wherein the fabric is based on polyester or glass fibres which are preferably felted, stitched, woven or spun bonded.

16. A pipe provided with a wrapping according to any preceding claim and embedded in a thermal insulating body itself surrounded by an outer casing.

*Fig.1.*

13

11

10

12

*Fig.2.*

20

21

22